# EUROPÄISCHE PATENTSCHRIFT

(11) **EP 1 611 066 B1**
(45) Veröffentlichungstag und Bekanntmachung des Hinweises auf die Patenterteilung: **29.10.2008**
(21) Anmeldenummer: 04725881.9
(22) Anmeldetag: 06.04.2004
(51) Int. Cl.: C03C 1/02, C03C 1/00, C03B 1/02, C03B 19/10, B01J 2/04

(54) **VERFAHREN ZUR HERSTELLUNG EINES KIESELSÄUREGRANULATES**
METHOD FOR PRODUCING A SILICEOUS GRANULAR MATERIAL
PROCEDE POUR PRODUIRE UN GRANULAT D'ACIDE SILICIQUE

(30) Priorität: 09.04.2003 DE 10316167; 01.07.2003 DE 10329806
(43) Veröffentlichungstag der Anmeldung: 04.01.2006
(73) Patentinhaber: Silicaglas Ilmenau GmbH, 98704 Langewiesen (DE)
(72) Erfinder: KREUZBERGER, Thomas, 98693 Ilmenau (DE)
(74) Vertreter: Liedtke, Klaus
(86) Internationale Anmeldenummer: PCT/DE2004/000731
(87) Internationale Veröffentlichungsnummer: WO 2004/092053

(56) Entgegenhaltungen:
- DE-A- 10 163 179
- US-A- 4 126 422
- US-A- 5 676 845
- US-A- 5 979 186

## Beschreibung

Die Erfindung betrifft ein Verfahren zur Herstellung eines Kieselsäuregranulates, bei dem Siliziumdioxidstaub zu einer Suspension verdichtet und anschließend granuliert wird und die Verwendung dieses Granulates zur Herstellung von Kieselglasgranulat.

Das Verfahren ermöglicht die Herstellung von Kieselsäuregranulat aus Siliziumdioxid-Stäuben mit definierten Formen der Granalien, die auch als Ausgangsmaterial für die Quarzglasherstellung geeignet sind.

Es ist bekannt, dass sich die für die Quarzglasschmelze geeigneten Granulate durch hohe Reinheit und definierte Korngrößenverteilungen auszeichnen sollen. Die Verunreinigungen beeinflussen den Schmelzvorgang und die Eigenschaften des Quarzglases auch bei äußerst geringen Konzentrationen. Der Schmelzvorgang wird auch wesentlich von der Korngrößenverteilung beeinflusst. Bei manchen Schmelzverfahren wird eine hohe Schüttdichte des Granulates angestrebt. Weiterhin ist gefordert, dass die einzelnen Körner dieser Granulate frei von Einschlüssen und Bläschen sind, um Punktdefekte im Glas zu vermeiden.

Die bekannten Verfahren zur Herstellung von Kieselglasgranulat aus Stäuben enthalten im Wesentlichen vier Schritte:
a) Verdichten des Staubes,
b) Granulierung,
c) Reinigung des porösen Granulates und
d) Verglasen.

Um ein Granulat mit den oben genannten Qualitätsforderungen wirtschaftlich produzieren zu können, ist es sinnvoll, die Verfahrensschritte aufeinander abzustimmen. Vorangehende technologische Schritte können bereits wesentlich die Kosten des gesamten Verfahrens beeinflussen.

Im Stand der Technik sind eine Reihe von Verfahren zur Herstellung von Kieselglasgranalien bekannt.
DE 44 24 044 A1 enthält eine Übersicht über derartige Verfahren und beschreibt selbst ein weiteres. Nach diesem Verfahren wird ein SiO₂-Staub mit einer Partikelgröße kleiner 1 µm mit Wasser zu einer Suspension verdichtet. Mit einer speziellen Methode der Aufbaugranulierung wird dann die dickflüssige Suspension mittels definierter Scherbeanspruchung in einem Rührgerät und Reduzierung des Wassergehaltes in ein poröses Granulat umgewandelt. Die Korngröße liegt zum Teil im Nutzfraktionsbereich, z.B. im Bereich von 90 µm bis 350 µm.
DE 197 29 505 A1 beschreibt die Verbesserung dieses Verfahrens hinsichtlich der Korngestalt, infolge dessen mit einer Steigerung der Nutzfraktion gerechnet werden kann.
Mit DE 199 37 861 A1 wird schließlich ein Verfahren zur Umwandlung eines porösen Granulates in ein Quarzglasgranulat durch feindosiertes Einbringen in eine sehr heiße Brenngasflamme beschrieben. Es bilden sich sehr schnell sphärische glasklare Körner. Von Vorteil ist der Klassierungseffekt, wonach feine Stäube entfernt werden können. Von Nachteil sind der hohe Energieaufwand für die Verglasung, demzufolge die hohen Kosten für die Betriebsgase und der hohe Hydroxylgehalt des Quarzglasgranulates, wodurch die Anwendung des Verfahrens eingeschränkt ist.
In EP 10 88 789 A2 wird ein komplettes Verfahren angegeben, das die Herstellung von Kieselglasgranulat aus einem Abfallstaub des Sootverfahrens erlaubt. Auch hier erfolgt die Verdichtung und Granulierung nach den bereits genannten Prinzipien. Zusätzlich wird ein Schritt zur Reinigung des porösen Granulates eingeführt. Damit eignet sich das Verfahren auch für poröse Granulate, die nach dem Sol-Gelverfahren durch Hydrolyse von Alkoxysilan hergestellt werden und folglich kohlenstoffhaltige Verbindungen enthalten, die dann ein Reinigungsschritt entfernt. Die Verglasung des Korns erfolgt in Heliumatmosphäre bei Temperaturen bis zu 1600°C über mehrere Stunden mit der Maßgabe, dass ein Verkleben der Körnung durch Fluidisierung verhindert wird.
Nach dem in EP 0 891 946 A1 vorgeschlagenen Weg wird die Verdichtung des Staubes durch Überführung in eine wässrige Suspension erreicht, die dann mittels Mikrowellen getrocknet wird. Als Granulierungsmethode wird Mahlen und Sieben angegeben. Demzufolge wird nur ein Teil der Masse in die Nutzfraktion überführt. Die Körner sind unregelmäßig geformt.

Den genannten Verfahren ist gemeinsam, dass die gewünschte Körnung (Nutzfraktion) mittels Klassierverfahren abgetrennt wird. Soweit für die Granulierung eine Suspension auf reiner Wasserbasis verwendet wurde, kann das Überkorn und das Unterkorn wieder in eine wässrige Suspension zurückgewandelt werden und einer erneuten Granulierung zugeführt werden.

Nach DE 101 60 597 A1 ist ein Verfahren zur Herstellung und Formgebung von Formkörpern mit Hilfe von Tiefkühl- und Trocknungsverfahren bekannt, mit dem eine fließfähige Masse unter Beimischung katalytisch aktiver Substanzen in Tröpfchen gewünschter Form und Größe zerteilt wird. Diese Tröpfchen werden in ein Tiefkühlmittel eingetragen, härten dort aus und werden anschlie ßend getrocknet und calziniert. Der Formkörper besteht aus mindestens einem porösen oxidischen Material und einem Metalloxid, das durch Hydrolyse eines Metallsäureesters hergestellt wird. Das Verfahren erlaubt zwar eine gute Materialausnutzung, die Kosten für das Tiefkühlverfahren sind jedoch beträchtlich.

Ferner ist nach DE 198 59 561 A1 ein Verfahren zur Herstellung eines Formkörpers bekannt, wobei der Formkörper mindestens ein poröses oxidisches Material und mindestens ein Metalloxid umfasst. Zur Herstellung wird das oxidische Material mit einem Metalloxid-Sol oder einem Metalloxid zu einer Suspension zusammengerührt und sprühgetrocknet. Danach wird das entstandene Pulver als Formkörper getrocknet und calziniert.

Der Erfindung liegt die Aufgabe zugrunde, ein Verfahren der eingangs genannten Art anzugeben, bei dem die Verfahrensschritte der Verdichtung und der Granulierung des Staubes so gestaltet werden, dass eine hohe Ausbeute des gewünschten porösen Kieselsäuregranulates erreicht wird und die weiteren Verfahrensschritte erleichtert werden.

Erfindungsgemäß wird die Aufgabe mit einem Verfahren, welches die in Anspruch 1 angegebenen Merkmale aufweist, gelöst.

Vorteilhafte Ausgestaltungen sind in den Unteransprüchen angegeben.

Mit der Erfindung wird ein wirtschaftliches Verfahren zur Herstellung von Kieselsäuregranulat aus Abfallstäuben geschaffen, wobei das Kieselsäuregranulat für die Kieselglasherstellung geeignet ist.

Das erfindungsgemäße Verfahren kann insbesondere solche Siliziumdioxid-Stäube verarbeiten, die bei der Herstellung von synthetischen Quarzglasprodukten, z.B. bei der Herstellung von Preformen für Lichtwellenleiter, durch Hydrolyse von Siliziumhalogeniden, beziehungsweise von siliziumorganischen Verbindungen nach dem Sootverfahren in großen Mengen anfallen und üblicher Weise in Filteranlagen aufgefangen werden.

Erfindungsgemäß wird für die Granulierung eine SiO₂-Suspension verwendet, die sich innerhalb kurzer Zeit verfestigen kann. Die Verfestigung erfolgt unmittelbar nach der Granulierung. Die Granulierung kann beispielsweise mit einem Sprühapparat, wie er für die Sprühtrocknung benutzt wird, durchgeführt werden. Erfindungsgemäß wird die Verfestigung der Granalien durch eine chemisch-katalytische Reaktion mit einem speziellen Gas im Granulierungsraum bewirkt. Die Reaktionsgeschwindigkeit ist so hoch, dass die Granalien bereits vor Erreichen des Auffang- oder Sammelbehälters fest sind und im Behälter miteinander nicht verkleben. Im Ergebnis entstehen poröse Granalien mit definiertem Habitus und hoher Festigkeit. Sie können mit den üblichen Verfahren gut in Kieselglasgranulat umgewandelt werden. Das Verfahren erlaubt ein kontinuierliches Granulieren bei sehr geringen SiO₂-Verlusten.
Die schnelle Verfestigung der Granalien beruht auf einem Sol-Gelprozess. Kieselgel-Bildung auf Basis von Alkoxysilanen ist aus der Literatur bekannt. Der Vorgang soll hier am Beispiel von Tetraethylorthosilikat (TEOS) erläutert werden. Wird TEOS mit Wasser unter sauren Bedingungen gemischt, dann läuft folgende Hydrolysereaktion ab

Si (OC₂H₅)₄ + 4 H₂O → Si(OH)₄ + 4 C₂H₅OH,

wobei ein SiO₂-haltiges Sol entsteht. Eine Erhöhung des pH-Wertes durch Zugabe einer basischen Lösung begünstigt die Kondensations- und Polymerisationsreaktion,

n Si(OH)₄ → [SiO₂]ₙ + 2n H₂O

Es entsteht ein SiO₂-Gel, d.h. ein raumfüllendes festes SiO₂-Netzwerk, dessen Poren mit dem Flüssigkeitsgemisch gefüllt sind.

Erfindungsgemäß wird die Polymerisationsreaktion durch ein neutralisierend wirkendes Gas an der Phasengrenze zwischen der Sol-Flüssigkeit und dem Gas eingeleitet. Eine schnell härtende Suspension mit hohem SiO₂-Gehalt kann durch Vermischen von zwei Komponenten herstellt werden. Die eine Komponente ist eine Mischung aus Staub und einer Flüssigkeit, die aus TEOS, das sauer hydrolysiert und anschließend gegebenenfalls durch Verdampfung des Äthanols eingeengt wurde. Die andere Komponente ist eine Mischung aus Staub und Wasser.

Bringt man diese Suspension als räumlich kleine Portionen in eine basische Atmosphäre, die auf die Portionsoberfläche neutralisierend wirkt, so verfestigen sich die Portionen innerhalb sehr kurzer Zeit. Ein solches Gas ist beispielsweise Ammoniak. Der Prozess ist irreversibel.

Mit dem erfindungsgemäßen Verfahren können Granalien sehr unterschiedlicher Gestalt erzeugen werden. Im Folgenden werden hierzu drei Beispiele erläutert.
a) Erzeugen stäbchenförmiger Granalien
   Hierzu wird die schnell härtende Suspension mit einem feinen Strahl in eine Ammoniak-Atmosphäre gespitzt. Der Strahl härtet sofort und zerbricht in kleine Stäbchen bei ausreichender Krafteinwirkung.
   Die Stäbchenlänge kann auch definiert hergestellt werden, beispielsweise durch ein schnell bewegtes Messer, das den Strahl hinter der Düse in die gewünschten Abschnittslängen schneidet, die anschließend in der Ammoniakatmosphäre härten. Der Querschnitt der Düse bildet sich geometrisch ähnlich im Querschnitt der Granalien ab. Somit können auch andere, beispielsweise rechteckige Querschnitte erzeugt werden.
b) Erzeugen kugelförmiger Granalien
   Die schnell härtende Suspension wird mittels Sprühdüsen in die Ammoniakatmosphäre verdüst, wobei sich initiiert durch die wirkende Oberflächenspannung Tröpfchen bilden, die in der Flugphase sofort fest werden und ohne Schaden an ihrer Gestalt zu nehmen in einem Auffangbehälter landen.
c) Erzeugen plättchenförmiger Granalien
   Die schnellhärtende Suspension wird mit einer Vorrichtung zur Herstellung keramischer Folien (z.B. Doctor-Blade-Verfahren) zu einer Folie ausgezogen. Die Folie durchläuft eine Kammer mit Ammoniak und härtet aus. Am Ende des Laufbandes kann die Folie bereits durch geeignete Messer gestückelt und gebrochen werden, wodurch die gewünschten Plättchen entstehen. Sollen Plättchen ohne Bruchkanten hergestellt werden, dann ist die Folie vor Eintritt in die Ammoniakkammer in die gewünschten Portionen aufzuteilen.

Die Prinzipien zur Herstellung vorgenannter Granalienformen sind bekannt. Notwendige Voraussetzung für die Anwendung bekannter Granulierungstechniken auf das erfindungsgemäße Verfahren ist eine Trennung zwischen Suspensionsvorratsraum und Granulierraum sowie eine schnell stattfindende Granulierung. Die Formgebung der Granulate muss abgeschlossen sein, bevor sich ihre Oberfläche verfestigt.

Die erfindungsgemäß hergestellten porösen Granulate zeichnen sich durch den Vorteil aus, dass sie gut in Kieselglasgranulat umgewandelt werden können. Zu diesem Zweck wird das Granulat zunächst getrocknet. Anschließend werden die organischen Bestandteile im porösen Granulat in sauerstoffhaltiger Atmosphäre im Temperaturbereich von 500°C bis 900 °C ausgebrannt. In einem weiteren Prozessschritt bei Temperaturen von 900°C bis 1100°C erfolgt eine Reinigung und die Entwässerung mittels Chlorwasserstoffgas.
Für die Verglasung des Granulates genügen bereits Temperaturen von 1350°C bis 1400°C.

Die Erfindung wird nachfolgend anhand eines Ausführungsbeispiels näher erläutert.

Verwendet wurde der SiO₂-Staub aus einem Sootprozess zur Herstellung von Lichtwellenleitervorformen mit einer spezifische Oberfläche nach BET-Methode von ca. 30 m²/g und den Hauptverunreinigungen Eisen von ca. 3 ppm und Kalzium von ca. 1 ppm.

Zur Herstellung der Komponente 1 wird eine Menge von 200 ml Tetraethylorthosilikat und 100 ml 0,01 normale Salzsäure vermischt und bis zur Klärung stark gerührt. Anschließend wird aus dieser Lösung mittels Rotationsverdampfer bei einem Druck von 165 mbar und einer Wasserbadtemperatur von 58 °C soviel Äthanol abgetrennt; bis sich das Volumen dieser Lösung um ein Drittel verringert hat. Diese eingeengte Lösung ist gekühlt mehrere Stunden haltbar. In diese Lösung wird eine Menge von 175 g SiO₂-Staub eingebracht bis eine homogene Suspension entsteht.
Die Komponente 2 ist eine gut homogenisierte Suspension aus 175 ml Wasser und 350 g SiO₂-Staub.
Die Komponenten 1 und 2 werden zusammengegeben sowie intensiv durchmischt und die entstandene Suspension in eine Kartusche aus Plastik gegeben. Die Kartusche hat eine Öffnung von ca. 400 µm. Durch diese Öffnung wird die Suspension in ein senkrecht stehendes Quarzglasrohr mit einem Innendurchmesser von 50 mm und einer Länge von 1 m von oben nach unten gespritzt. Das Rohr ist oben mit der Kartusche passend abgedichtet und unten mit einem Schliff auf einen Erlenmeyerkolben gesteckt. Seitlich oben am Rohr befindet sich eine Öffnung, durch die Ammoniakgas in das Rohr strömt, sodass das Gas auf den Suspensionsstrahl trifft. Am unteren Ende des Rohres befindet sich eine Öffnung, in die Stickstoff gespült wird. Die überschüssigen Gase werden von der Mitte des Rohres abgeleitet.
Die Suspension wird durch die kleine Öffnung der Kartusche gleichmäßig entleert. Das im Erlenmeyerkolben aufgefangene extrudierte Material wird anschließend auf eine Länge kleiner 2 mm gebrochen und danach getrocknet. In einem Drehrohrofen, der auf eine Temperatur von 800°C eingestellt ist, erfolgt die Verbrennung der organischen Verunreinigungen. Die Chlorierung des Granulates erfolgt bei 1000°C über einen Zeitraum von 1 Stunde.

## Patentansprüche

1. Verfahren zur Herstellung eines Kieselsäuregranulates, bei dem Siliziumdioxidstaub zu einer Suspension verdichtet und anschließend granuliert wird, **dadurch gekennzeichnet, dass** aus Siliziumdioxidstaub und einer Flüssigkeit, die aus einem sauer oder basisch hydrolysiertem Alkoxysilan besteht, eine Suspension erzeugt wird, welche granuliert wird und die Granalien in einer Gasatmosphäre verfestigt werden, wobei die Gasatmosphäre ein Gas enthält, das auf die Suspension neutralisierend wirkt, wobei die Granulierung in einem vom Suspensionsvorratsraum getrennten Granulierraum erfolgt.

2. Verfahren nach Anspruch 1, **dadurch gekennzeichnet, dass** das Alkoxysilan Tetraethylorthosilikat ist.

3. Verfahren nach Anspruch 1 oder Anspruch 2, **dadurch gekennzeichnet, dass** im Falle einer sauren Hydrolyse das Gas Ammoniak ist und im Falle einer basischen Hydrolyse das Gas Chlorwasserstoff ist.

4. Verfahren nach einem der vorhergehenden Ansprüche, **dadurch gekennzeichnet, dass** die Suspension vor der Granulierung mit einer wässrigen Siliziumdioxidsuspension vermischt wird.

5. Verfahren nach Anspruch 4, **dadurch gekennzeichnet, dass** der gesamte Anteil Siliziumdioxidstaub durch die wässrige Siliziumdioxidsuspension eingebracht wird.

6. Verfahren nach einem der vorhergehenden Ansprüche, **dadurch gekennzeichnet, dass** der Siliziumdioxidstaub ein Abfallstaub aus einem Sootprozess ist oder synthetisch hergestellt wurde.

## Claims

1. Procedure for manufacturing a silicic acid granulate in which silicon dioxide dust is densified into a suspension and then granulated, **characterized in that,** using silicon dioxide dust and a liquid which consists of acid or basic hydrolyzed alkoxysilane, a suspension is generated which is granulated, and the granulates are solidified in a gas atmosphere, while the gas atmosphere contains a gas which has a neutralizing effect on the suspension, while granulation is performed in a granulation room separated from the suspension storage room.

2. Procedure as claimed in claim 1, **characterized in that** the alkoxysilane is tetraethyl orthosilicate.

3. Procedure as claimed in claim 1 or claim 2, **characterized in that**, in the case of acid hydrolysis, the gas is ammonia, and **in that**, in case of basic hydrolysis, the gas is hydrogen chloride.

4. Procedure as claimed in any preceding claim, **characterized in that** the suspension is mixed with an aqueous silicon dioxide suspension prior to granulation.

5. Procedure as claimed in claim 4, **characterized in that** the entire silicon dioxide dust portion is introduced by the aqueous silicon dioxide suspension.

6. Procedure as claimed in any preceding claim, **characterized in that** the silicon dioxide dust is a waste dust from a soot process, or has been manufactured synthetically.

## Revendications

1. Procédé de fabrication de granulés de silice, où de la poussière de dioxyde de silicium est densifiée en suspension avant d'être granulée, **caractérisé en ce qu'**une suspension est produite à partir de poussière de dioxyde de silicium et d'un liquide composé d'un alcoxysilane acide ou basique, laquelle est granulée, et **en ce que** les granulés sont solidiés en atmosphère gazeuse, ladite atmosphère gazeuse contenant un gaz à action neutralisante sur la suspension, la granulation étant réalisée dans une chambre de granulation séparée du récipient de suspension.

2. Procédé selon la revendication 1, **caractérisé en ce que** l'alcoxysilane est du tétraéthylorthosilicate.

3. Procédé selon la revendication 1 ou la revendication 2, **caractérisé en ce que** le gaz est de l'ammoniac dans le cas d'une hydrolyse acide, et du chlorure d'hydrogène dans le cas d'une hydrolyse basique.

4. Procédé selon l'une des revendications précédentes, **caractérisé en ce que** la suspension est mélangée à une suspension aqueuse de dioxyde de silicium avant granulation.

5. Procédé selon la revendication 4, **caractérisé en ce que** toute la part de poussière de dioxyde de silicium est versée dans la suspension aqueuse de dioxyde de silicium.

6. Procédé selon l'une des revendications précédentes, **caractérisé en ce que** la poussière de dioxyde de silicium est une poussière résiduelle d'un processus de formation de suie, ou **en ce qu'**elle a été synthétiquement produite.
